# EUROPEAN PATENT APPLICATION

(11) **EP 4 425 447 A1**
(43) Date of publication of application: **04.09.2024**
(21) Application number: 24160967.6
(22) Date of filing: 01.03.2024
(51) Int. Cl.: G06V 10/82

(54) **COMPUTER-IMPLEMENTED METHOD FOR THE DETECTION OF ADHESIVE MATERIAL ON A SUBSTRATE**

(30) Priority: 02.03.2023 EP 23159608
(71) Applicant: Ero S.r.l., 25010 Montirone (BS) (IT); Universita' degli studi di Brescia, 25121 Brescia (IT); Made S.C.A R.L., 20133 Milano (MI) (IT)
(72) Inventor: GIUSTOLISI, Riccardo, 25010 Montirone (IT); PORCARI, Giacomo, 25010 Montirone (IT); SERINA, Ivan, 25121 BRESCIA (IT); GEREVINI, Alfonso Emilio, 25121 BRESCIA (IT)
(74) Representative: Luppi, Emanuele

(57) **Abstract**

The computer-implemented method comprises the following phases:
- phase of acquisition of at least one input image (1) of a substrate (2) which is substantially planar and subjected to a process of distribution of at least one stretch of adhesive material (3) over the relevant surface;
- phase of generation, carried out by means of a trained neural network starting from the input image (1), of an identification code of one or more parameters representative of the distribution of the stretch of adhesive material (3) on the substrate (2);
- phase of comparison of the identification code with a corresponding predefined reference model to generate a compliancy datum of the distribution of the stretch of adhesive material (3) on the substrate (2).

## Description

### Technical Field

The present invention relates to a computer-implemented method for the detection of adhesive material on a substrate.

### Background Art

In the paper converting and packaging industry, the presence of quality control to monitor the position and distribution of adhesive material is increasingly considered an enabling technology. It is therefore necessary for companies operating in the sector to provide themselves with tools which are able to guarantee the quality and homogeneity of the batches produced.

Adhesive materials generally used in this industry fall into two categories: cold adhesives and hot-melt adhesives. The adhesive material is distributed over a substrate by means of a bonding machine provided with special dispensers.

Once the distribution of the adhesive material has been made, the implementation of control methods is known in order to ensure proper distribution of the adhesive material and consequently optimal sealing of the bonded surfaces.

A first known method involves the use of capacitive or infrared sensors. This method is conveniently applicable to any type of substrate, whether it has graphic decorations or not.

The sensors, however, do not allow for effective detection of the conformation of the adhesive material application and/or the homogeneity thereof. In particular, the sensors do not allow for the optimal detection of "splashing" phenomena, i.e., application of adhesive material which extends from a predefined distribution trajectory.

In addition, the use of sensors makes it considerably complex to detect adhesive material in places not intended to receive the same.

Still, it should be pointed out that in the paper converting and packaging industry, it is common to use a variety of adhesive material types, e.g., cold glue and hot-melt glue, which are not effectively detectable using an individual sensor of a known type. Therefore, for some applications it is necessary to proceed with separate detection methods depending on the adhesive material used, resulting in increased cost and time.

Finally, such sensors do not allow for understanding the reason for any non-compliances in a timely manner, still requiring a final check by an operator.

In order to solve at least part of the aforementioned drawbacks, a second known method involves the use of vision systems.

Vision systems enable monitoring of a large area, thus making it easy to detect the presence of adhesive material in places not intended to receive the same.

In addition, vision systems allow detecting both hot-melt glue and cold glue with the same camera.

The use of camera systems allows the operator to understand the reason for any non-compliances in a timely manner.

However, the method with vision systems is more affected by the graphic and structural characteristics of the substrate. In fact, the presence of areas with lettering/drawings, embossing to increase glue penetration (and thus bond strength), three-dimensional decorations (reliefs or recesses), reflective surfaces, etc. can result in incorrect or inaccurate detections.

In addition to this, the adhesive material itself can also generate reflection areas that make the relevant detection complex. Indeed, it should be specified that the adhesive material normally used in such applications is of the type of white or colorless glue and provided with an inherent glossiness given by the liquid components of the same.

Therefore, the method with vision systems requires specific lighting conditions which may vary depending on the substrate and/or on the adhesive material.

Nevertheless, the method with vision systems may require in turn additional visual inspection by an operator.

For this reason, the use is well known of additives, of the type of fluorescent or ultraviolet-sensitive substances, to be added to the adhesive material in order to make it stand out more from the surface of the substrate.

Even such a solution does not, however, fully fix the drawbacks associated with this method. The use of additives, in addition to increasing the costs related to such operations, is not always compatible with the type of application for which the substrate is intended, e.g., in the food sector the use of such additives is not allowed due to possible migration of chemical components from the packaging to the product.

Finally, the detection of different adhesives (hot or cold) with vision systems may require specific adjustment of the operating parameters by the user.

Through the methods of known type, therefore, it is very difficult to analyze any type of substrate without incurring in errors.

### Description of the Invention

The main aim of the present invention is to devise a computer-implemented method for the detection of adhesive material on a substrate which allows the effective detection of any non-compliances in the distribution of the adhesive material on any type of substrate.

Another object of the present invention is to devise a computer-implemented method for the detection of adhesive material on a substrate which allows the detection of any type of adhesive material and does not require the use of specific additives.

A further object of the present invention is to devise a computer-implemented method for the detection of adhesive material on a substrate which ensures correct detection and does not require any additional visual inspection by an operator.

Another object of the present invention is to devise a computer-implemented method for the detection of adhesive material on a substrate which allows the aforementioned drawbacks of the prior art to be overcome within the framework of a simple, rational, easy and effective to use as well as affordable solution.

The aforementioned objects are achieved by the present computer-implemented method for the detection of adhesive material on a substrate having the characteristics of claim 1.

### Brief Description of the Drawings

Other characteristics and advantages of the present invention will become more apparent from the description of a preferred, but not exclusive, embodiment of a computer-implemented method for the detection of adhesive material on a substrate, with reference to the attached tables of drawings in which:

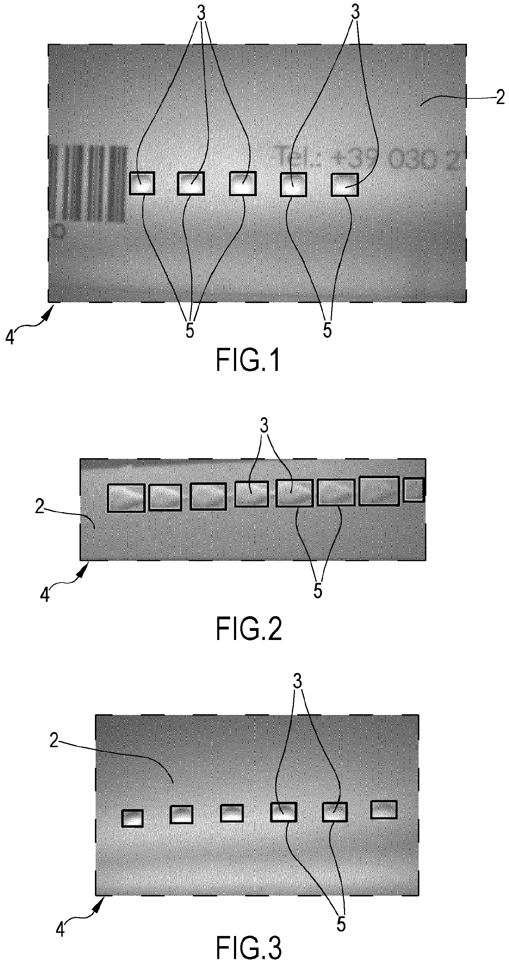

Figures 1-3 show examples of detection of adhesive material on substrates having three-dimensional decorations and/or graphic decorations in accordance with the method according to the invention;
Figure 4 is a schematic representation of the acquisition means and the lighting means in a phase of acquisition of the present method;
Figure 5 is a schematic representation of the operations carried out by the neural network in a phase of generation of the present method;
Figures 6 and 7 are schematic representations of the operations carried out by the algorithm in a phase of comparison of the present method.

### Embodiment of the Invention

The method according to the invention is implemented by means of a detection system provided with a computer.

This method finds application in the control of adhesive material distribution in the paper converting and packaging industry.

The method comprises the following phases:
- phase of acquisition of at least one input image 1 of a substrate 2 which is substantially planar and subjected to a process of distribution of at least one stretch of adhesive material 3 over the relevant surface;
- phase of generation, carried out by means of a trained neural network starting from the input image 1, of an identification code of one or more parameters representative of the distribution of the stretch of adhesive material 3 on the substrate 2;
- phase of comparison of the identification code with a corresponding reference model to generate a compliancy datum of the distribution of the stretch of adhesive material 3 on the substrate 2.

In the context of this disclosure, the term "substantially planar" refers to the fact that the substrate 2 mainly develops on one individual plane. In addition, the substrate 2 is of the continuous type, that is, it has no holes or openings at the points where the adhesive material is distributed.

In accordance with the preferred embodiment, the substrate 2 is made of paperboard material. For example, the substrate is of the type of a paperboard or cardboard sheet. It cannot, however, be ruled out that the present method may be also applicable to substrates that are not planar and/or made of different materials, e.g., of plastic material, wood, leather.

The adhesive material is preferably white or colorless. The adhesive material is selected from the list comprising: vinyl glue, starch-based glue, hot-melt glue or the like.

In addition, depending on the viscosity of the adhesive material, the stretch of adhesive material 3 may define a relief on the substrate 2.

The distribution of the adhesive material is carried out by means of a bonding machine of known type which is not covered by the present invention and results in the formation of at least one stretch of adhesive material 3 on the surface of the substrate 2.

The adhesive material can be distributed in a linear manner, to define a continuous strip of adhesive material, or pointwise, to define a single bonding point. The adhesive material can also be distributed with a plurality of stretches, either linear or pointwise, to form a discontinuous row of bonding points.

The stretch of adhesive material 3 allows the substrate 2 to be bonded to additional substrates made of paperboard material and/or other material.

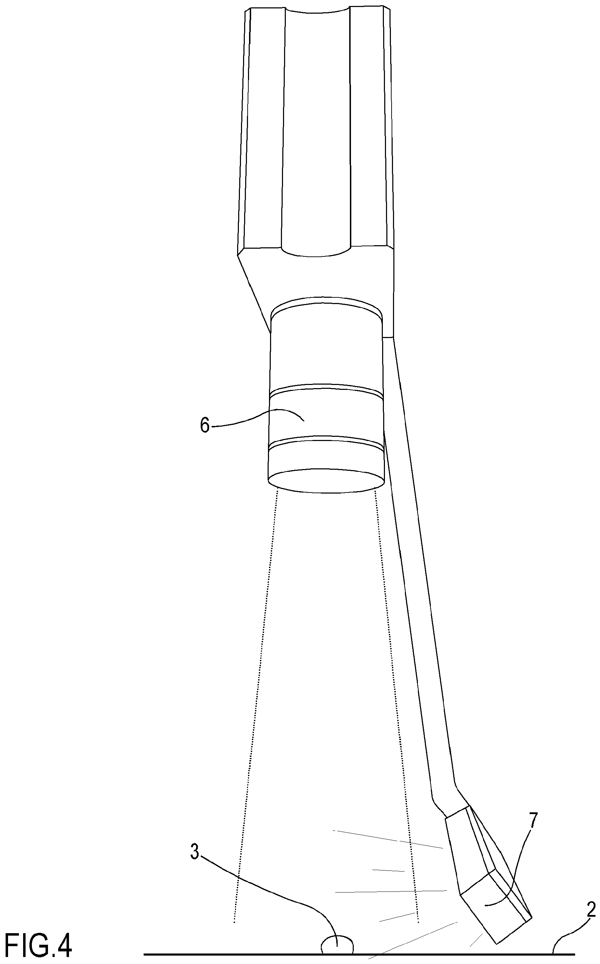

The phase of acquisition is carried out by means of acquisition means 6 operationally connected to the computer. In accordance with the embodiment shown in Figure 4, the acquisition means 6 comprise a video camera. It cannot, however, be ruled out that the acquisition means 6 may comprise devices of different type, e.g. of the type of cameras or other image acquisition systems.

The acquisition means 6 are configured to acquire the input image 1 after the substrate 2 has been subjected to the distribution process of the adhesive material. For this purpose, the computer comprises a memory unit configured to store at least the input image 1 of the substrate 2.

In accordance with a preferred embodiment, the acquisition means 6 are configured to acquire substantially rectangular input images 1. Preferably, the acquisition means 6 are configured to acquire substantially square input images 1, the side of which is about 60 millimeters.

In addition, the acquisition means 6 are configured to acquire images of the substrate as the latter is transferred from the bonding machine to further processing stations. Therefore, the acquisition means 6 are configured to acquire the input images 1 at a preset speed which is adjusted as a function of the transfer speed of the bonding machine.

The phase of acquisition is, therefore, carried out at the preset speed.

In addition, the phase of acquisition is carried out so that each image is partly overlapped on the next one and/or on the previous one. This avoids possible recognition errors of the stretches of adhesive material 3 due to the partial acquisition of some of them. In fact, the acquisition of partially overlapping images causes at least one of the two images to contain the complete stretch of adhesive material 3.

Conveniently, the input image 1 is acquired in gradation of grayscale. The acquisition means 6, in fact, are configured to acquire the image in grayscale so as to reduce the timing related to this operation. It cannot, however, be ruled out that the input image 1 may be acquired in color.

Advantageously, prior to the phase of acquisition, the method comprises a phase of lighting the substrate.

The phase of lighting is carried out by means of at least one light beam incident the substrate 2 at an angle of incidence other than 90°.

The phase of lighting is carried out by means of the lighting means 7, associated with the acquisition means 6 and adapted to generate the light beam.

Specifically, the angle of incidence is comprised between 0° and 180° but other than 90°. When the angle of incidence is 90°, in fact, the lighting generates reflection areas or otherwise low-contrast areas that prevent the adhesive material to be distinguished from the substrate. This occurrence is even more evident in the case of a white background. A minimal inclination of the light beam, on the other hand, makes it possible to avoid the occurrence of this problem.

In addition to this, the lighting of the adhesive material with a light beam which is not orthogonal to the substrate results in the formation of a shadow area that can further facilitate the distinction of the adhesive material from the substrate itself.

The light beam is appropriately positioned and calibrated prior to the phase of acquisition in order to optimize the visibility of the adhesive material on the substrate.

Preferably, the angle of incidence is of between 0° and 60°, more preferably of between 20° and 50°, even more preferably it is equal to 40°. At such angles, in fact, it has been observed that the neural network is able to distinguish the stretch of adhesive material 3 more effectively than the substrate 2.

In accordance with a preferred embodiment shown in Figure 4, the lighting means 7 comprise a segment of LEDs about 70 millimeters long, extending parallel to the analyzed glue stretches.

It is easy to appreciate that, depending on the size of the input image 1 that is to be acquired, the led segment can be of different lengths.

By positioning the light source laterally and very close to the bonded substrate, the glue generates a homogeneous and well-detectable shadow, a feature that improves the performance of the trained neural network.

The phase of generation enables the automatic identification of the stretches of adhesive material thanks to the neural network.

Conveniently, the neural network is a deep neural network configured for the object recognition within images.

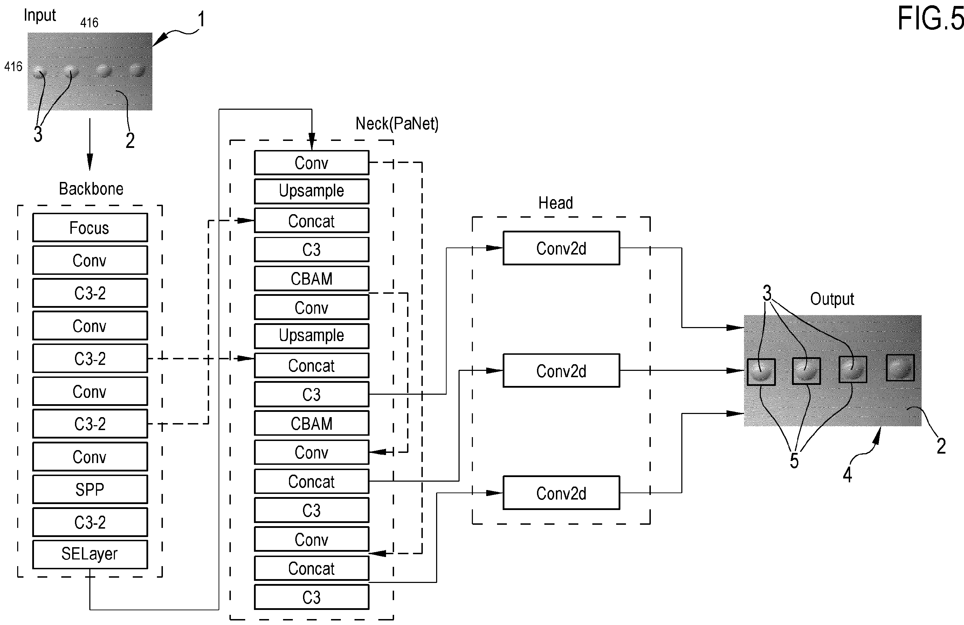

Preferably, the deep neural network is Yolov5, from the open source distributed Ultralitycs Inc. company, in its "s" (small) configuration. Such a neural network consists of three basic parts (Figure 5):
- "Backbone", a set of convolutional layers which are responsible for receiving the image to be analyzed and extracting the features of interest. These are grouped into a map of features which are provided to the next block.
- "Neck", a set of convolutional layers useful for mixing and matching the features of the image and conveying them to the prediction.
- "Head", the last set of layers providing the output of the analysis.

The predictions generated by this data structure correspond to a list of bounding boxes placed where objects have been recognized within the analyzed image. Each of these boxes is associated with a class, which corresponds to the type of object recognized.

Compared with the available open-source version, the neural network has been modified in some structural details in order to better suit this specific application. Specifically, the number of input channels has been reduced from three to one and the size of the input images has been fixed at 416x416 pixels. At the same time, the number of object classes to be searched has been reduced to two, namely "glue stretch without tail" and "glue stretch with tail". This distinction was made to grant the user the choice of being more or less rigid in accepting or not accepting the presence of small glue smears caused by the high speeds reached by the bonding machines generally used for such applications. In this regard, it cannot be ruled out that the number of channels, the size of the input image and the number of classes may be of different types depending on the user's needs.

To achieve good performance in the phase of inference, it is important to train such a network with a large number of different images from each other, as will be better described later in this disclosure.

For this purpose, the method also comprises a phase of training of the neural network. The phase of training comprises a step of providing a plurality of predefined images of different substrates as input to the neural network in combination with text files that identify the boxes bounding the stretches of adhesive material present.

In addition, in order to artificially increase the number of images available for training, Data Augmentation techniques have been applied, i.e., procedures that rely on modifying the original data available to the user for the creation of new images. In particular, three algorithms have been used for the present solution:
- Gaussian Blur, application of blurring by means of the Gaussian function. A convolution is carried out using a square matrix of *a priori* fixed size as the kernel, and each pixel of the original image is replaced by the weighted average of its neighbors. The use of this algorithm is convenient to make the deep neural network resistant to any loss of focus by the camera.
- modification of brightness, by increasing and decreasing the values of each pixel by a predetermined percentage, such as 20 percent. This algorithm makes it possible to train the model so that it can adapt to different lighting contexts.
- flipping the image along the horizontal axis, so as to simulate the image acquisition with the light source positioned on the opposite side of the glue stretch. In some cases, in fact, due to mechanical reasons or to avoid excessive clutter, it may be necessary to install the lighting means 7 on the opposite side with respect to the deposited stretch of glue. This algorithm, therefore, allows optimizing the performance of the neural network even in the event of the image having shaded areas on the opposite side with respect to the previously processed images.

After the application of the Gaussian Blur, brightness enhancement and reduction, and image flipping, a dataset of thousands of images is obtained. According to a preferred embodiment, the method has been applied to a dataset of 25,400 images.

The images are then provided to the neural network and the relevant outcome is monitored and corrected, if necessary, in order to increase the reliability of the neural network itself.

Advantageously, the phase of generation comprises a step of identification of the stretch of adhesive material 3 in the input image 1 and a step of processing of the identification code.

In detail, the input image 1 is divided according to a 416x416x1 matrix containing values from 0 to 255. This image is analyzed by the neural network which returns a text file where there is the list of the detected stretches of adhesive material 3, identified by a series of identification codes.

Conveniently, the identification code identifies at least one parameter selected from the list comprising: position of the stretch of adhesive material 3 on the substrate 2 and conformation of the distributed stretch of adhesive material 3.

Each identification code consists of six numerical values, one integer and five decimals.

The integer value indicates the class to which the identified object belongs. In this particular case, the two possible classes are numbered 0 (glue stretch without tail) and 1 (glue stretch with tail).

A decimal value, in the range of 0 to 1, expresses the confidence associated with the identified object.

The remaining four decimal values represent the coordinates of the bounding box 5 of the object identified within the image. The returned values range from 0 to 1, where the point with coordinates (0,0) represents the top-left vertex, the point with coordinates (1,1) the bottom-right vertex. Specifically, the four returned values indicate the horizontal and vertical coordinates of the center of the bounding box 5, the width and the height thereof, respectively.

In the case where the substrate 2 comprises a plurality of stretches of adhesive material 3, prior to the phase of comparison, the method comprises a phase of selection of a subset of stretches of adhesive material, selected as a function of the predefined reference model.

In this regard, it is specified that the expression "predefined reference model" relates to an ideal distribution model of the stretches of adhesive material 3 that the user expects to obtain as a result of the distribution. It should be noted that the first image validated by the operator will be used as the reference model for the next phase.

The predefined reference model then reports the exact number of stretches of adhesive material 3 and their correct position in the photographed portion of substrate 2.

Specifically, in the present case, the phase of selection is carried out as a function of the shape of the glue drop (with or without tail), that is, considering the first numerical value of the identification code.

Advantageously, the method also comprises a phase of processing at least one output image 4 provided with at least one box 5 bounding the stretch of adhesive material 3, starting from the input image 1 and from the corresponding identification code.

The output image 4 allows for immediate visual feedback to the user, who is able to tell at a glance whether the neural network has detected all of the stretches of adhesive material 3.

The next phase of comparison comprises a step of generation of a horizontal vector and of a vertical vector as a function of at least one box 5 bounding the stretch of adhesive material 3.

In detail, vectors represent the horizontal and vertical projections of the boxes in order to convert them into one-dimensional numerical values.

The vertical vector is as long as the number of pixels in the image along the vertical dimension and contains the value 0 if there is no bounding rectangle at that vertical coordinate or 1 if there is.

The horizontal vector is as long as the number of pixels of the image along the horizontal dimension and contains the value 0 if there is no box 5 at that horizontal coordinate or a number corresponding to the number of boxes 5.

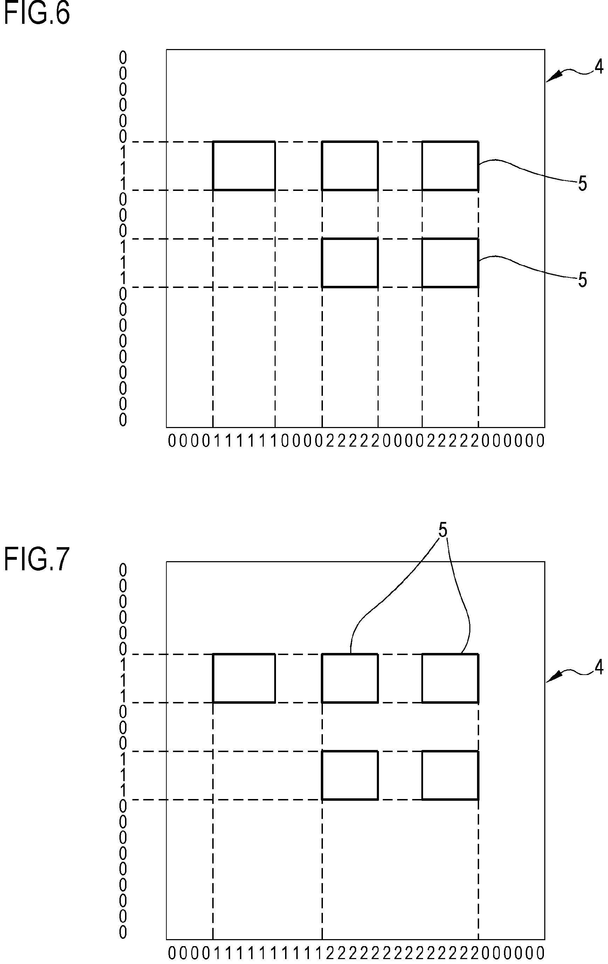

Figure 6 shows the step of generation of the vectors as an example.

In addition, in order to avoid the generation of false errors caused by imperfect alignment of the stretches of adhesive material 3 between an input image 1 and a subsequent one, the image is further processed so that the boxes 5, on the horizontal axis, are considered as one if the distance between the center of these is less than a value, called "gap", preset by the user. Joining stretches means replacing the 0s in the horizontal vector present between two stretches with the number of lines above (Figure 7).

The phase of comparison then comprises a step of mathematical comparison of at least one of the vectors with corresponding vectors of the predefined reference model to obtain the compliancy datum.

The phase of comparison is appropriately carried out by means of a special comparison algorithm installed on the computer.

Specifically, if the number of values corresponding to 1 is different from the model, the compliancy datum is set as "negative" and the substrate is considered unsuitable.

If this is not the case, the analysis is carried out which involves subtracting the values of the vertical vectors of the investigated image and of the model so as to have an individual resulting vertical vector containing the value of 0 when the stretches coincide and values of 1 or -1 in case of differences. If there are segments containing values other than 0 that are longer than a value, called "vertical tolerance", preset by the user, the compliancy datum is set as "negative" and the substrate is considered unsuitable.

If not, the analysis is carried out even further on.

Before checking the horizontal axis, if the start of the first glue stretch from the left for the two compared analyses differs by at most one parameter set by the user, the system tries to align the two compared stretches. At this point, as with the vertical vectors, subtraction of the two horizontal vectors is carried out, but in this case in the non-coinciding stretches there may also be values other than 1 and -1. If there are segments containing values other than 0 which are longer than a parameter set by the user, called "horizontal tolerance", the compliancy datum is set as "negative" and the substrate is considered unsuitable. Otherwise, the substrate 2 is considered suitable.

The method described above works on a series of input images 1 in sequence, the number of which depends on the length of the deposited adhesive material. In the case where multiple images are needed to analyze the adhesive material, these are separately analyzed by the neural network and then later joined together to create the horizontal and vertical vectors.

In accordance with the invention, the substrate may comprise at least one three-dimensional decoration and/or at least one graphic decoration. In detail, the expression "three-dimensional decoration" refers to the fact that the surface of the substrate may not be perfectly flat, i.e., it may have an embossing, generally used to increase the penetration of the adhesive material (and thus the bonding strength) or an actual decorative pattern in the form of reliefs and/or recesses. The expression "graphic decoration", on the other hand, refers to the printing of drawings and/or lettering but also to special surface effects of the substrate such as a glossy, iridescent surface or the like.

Conveniently, the neural network is trained to distinguish the stretch of adhesive material from decorations.

In addition, it should be specified that the adhesive material is provided with an inherent glossiness given by the liquid components and, therefore, the phase of lighting may result in the formation of reflection areas on the adhesive material itself.

The neural network is also appropriately trained to recognize the adhesive material in the case of reflection areas on the adhesive material itself. Therefore, the phase of training also involves processing images of substrates having a reflection area in the distributed adhesive material.

According to a further aspect, the present invention also relates to a system for the detection of adhesive material on a substrate.

The system according to the invention comprises:
- acquisition means 6 adapted to acquire at least one input image 1 of a substantially planar substrate 2 subjected to a process of distribution of at least one stretch of adhesive material 3 over the relevant surface;
- at least one computer, operationally connected to the acquisition means 6, configured to receive the input image 1.

The computer is provided with:
- a trained neural network configured to generate an identification code for one or more parameters representative of the distribution of the stretch of adhesive material 3 on the substrate 2, starting from the input image 1;
- a comparison unit configured to compare the identification code with a corresponding predefined reference model and to generate a compliancy datum of the distribution of the stretch of adhesive material 3 over the substrate 2.

In detail, the comparison unit is programmed with the previously described comparison algorithm.

It has in practice been ascertained that the described invention achieves the intended objects, and in particular, the fact is emphasized that the present computer-implemented method for the detection of adhesive material on a substrate enables the effective detection of any non-compliances in the distribution of the adhesive material on any type of substrate. In fact, the use of a neural network always allows the distinction of the adhesive material from the decorative effects of the substrate and enables effective and reliable detection.

In addition, the method according to the invention allows the detection of any type of adhesive material and does not require the use of specific additives. The neural network enables the recognition of the adhesive material even in cases where lighting may generate reflection areas on the adhesive material itself.

Finally, this method ensures correct detection which does not require any additional visual inspection by an operator.

## Claims

1. Computer-implemented method for the detection of adhesive material on a substrate, said method being **characterized by** the fact that it comprises the following phases:
- phase of acquisition of at least one input image (1) of a substrate (2) which is substantially planar and subjected to a process of distribution of at least one stretch of adhesive material (3) over the relevant surface;
- phase of generation, carried out by means of a trained neural network starting from said input image (1), of an identification code of one or more parameters representative of the distribution of said stretch of adhesive material (3) on said substrate (2);
- phase of comparison of said identification code with a corresponding predefined reference model to generate a compliancy datum of the distribution of said stretch of adhesive material (3) on said substrate (2).

2. Method according to claim 1, **characterized by** the fact that said neural network is a deep neural network configured for the object recognition within images.

3. Method according to one or more of the preceding claims, **characterized by** the fact that said phase of generation comprises a step of identification of said stretch of adhesive material (3) in said input image (1) and a step of processing of said identification code.

4. Method according to one or more of the preceding claims, **characterized by** the fact that said identification code identifies at least one parameter selected from the list comprising: position of said stretch of adhesive material (3) in said input image (1), conformation of said distributed stretch of adhesive material (3).

5. Method according to one or more of the preceding claims, **characterized by** the fact that said substrate (2) comprises a plurality of said stretches of adhesive material (3) and by the fact that, prior to said phase of comparison, said method comprises a phase of selection of a subset of stretches of adhesive material, selected as a function of said predefined reference model.

6. Method according to one or more of the preceding claims, **characterized by** the fact that it comprises a phase of processing at least one output image (4) provided with at least one box (5) bounding said stretch of adhesive material (3), starting from said input image (1) and from the corresponding identification code.

7. Method according to one or more of the preceding claims, **characterized by** the fact that said phase of comparison comprises a step of generation of a horizontal vector and of a vertical vector as a function of said at least one box (5) and a step of mathematical comparison of at least one of said vectors with corresponding vectors of said predefined reference model to obtain said compliancy datum.

8. Method according to one or more of the preceding claims, **characterized by** the fact that said stretch of adhesive material (3) defines a relief on the surface of said substrate (2) and by the fact that, prior to said phase of acquisition, said method comprises a phase of lighting said substrate (2) carried out by means of at least one light beam incident said substrate (2) at an angle of incidence other than 90° to obtain at least one shadow area generated by said stretch of adhesive material (3).

9. Method according to one or more of the preceding claims, **characterized by** the fact that it comprises a phase of training of said neural network which comprises a step of providing a plurality of predefined images of substrates (2) provided with said at least one stretch of adhesive material (3) as input to said neural network in combination with corresponding identification codes.

10. Method according to one or more of the preceding claims, **characterized by** the fact that said substrate comprises at least one three-dimensional decoration and/or at least one graphic decoration and by the fact that said neural network is trained to distinguish said stretch of adhesive material (3) from said decorations.

11. Method according to one or more of the preceding claims, **characterized by** the fact that said adhesive material is distributed in a linear or pointwise manner.

12. Method according to one or more of the preceding claims, **characterized by** the fact that said substrate is made of paperboard material.

13. Method according to one or more of the preceding claims, **characterized by** the fact that said adhesive material is of the type of a glue.

14. System for the detection of adhesive material on a substrate, **characterized by** the fact that it comprises:
- acquisition means (6) adapted to acquire at least one input image (1) of a substantially planar substrate (2), subjected to a process of distribution of at least one stretch of adhesive material (3) over the relevant surface;
- at least one computer, operationally connected to said acquisition means (6), configured to receive said input image (1) and provided with:
- a trained neural network configured to generate an identification code for one or more parameters representative of the distribution of said stretch of adhesive material (3) on said substrate (2), starting from said input image (1);
- a comparison unit configured to compare said identification code with a corresponding predefined reference model and to generate a compliancy datum of the distribution of said stretch of adhesive material (3) over said substrate (2).
